# EUROPEAN PATENT SPECIFICATION

(11) **EP 1 364 482 B1**
(45) Date of publication and mention of the grant of the patent: **26.09.2007**
(21) Application number: 02711598.9
(22) Date of filing: 08.02.2002
(51) Int. Cl.: H04L 1/00, H04L 12/56, H04L 29/06

(54) **METHOD AND APPARATUS FOR AVOIDING UNNECESSARY RETRANSMISSIONS IN A CELLULAR MOBILE RADIO SYSTEM**
VERFAHREN UND VORRICHTUNG ZUR VERMEIDUNG UNNÖTIGER SENDEWIEDERHOLUNGEN IN EINEM ZELLULAREN MOBILFUNKSYSTEM
PROCEDE ET DISPOSITIF PERMETTANT D'EVITER LES RETRANSMISSIONS INUTILES DANS UN SYSTEME CELLULAIRE

(30) Priority: 28.02.2001 SE 0100739
(43) Date of publication of application: 26.11.2003
(73) Proprietor: TELEFONAKTIEBOLAGET LM ERICSSON (publ), 164 83 Stockholm (SE)
(72) Inventor: DAHLMAN, Erik, S-168 68 Bromma (SE); PARKVALL, Stefan, S-113 22 Stockholm (SE); PEISA, Janne, FIN-02130 Espoo (FI); TORSNER, Johan, FIN-02600 Espoo (FI)
(74) Representative: Lind, Robert
(86) International application number: PCT/SE2002/000230
(87) International publication number: WO 2002/069547

(56) References cited:
- WO-A1-99/03228
- US-A- 5 677 918
- US-A- 6 097 731

## Description

### TECHNICAL FIELD OF THE INVENTION

The present invention relates to retransmissions in a communications system, and more especially it relates to a cellular mobile radio system, particularly to a Universal Mobile Telecommunications System, UMTS or WCDMA system.

### BACKGROUND AND DESCRIPTION OF RELATED ART

Retransmission of data to or from a mobile station, MS, or user equipment, UE, is previously known. It is also known to use medium access control and radio link control layers of a UMTS protocol structure in acknowledged mode for dedicated channels.

In acknowledged mode, retransmissions are undertaken in case of detected transmission errors not recovered by forward error control. This is also called automatic repeat request, ARQ. With ARQ, retransmissions can be undertaken unless a transmitted message is (positively) acknowledged or if it is negatively acknowledged. Generally there are time limits for the respective positive and negative acknowledgements to be considered.

Within this patent application, a radio network controller, RNC, is understood as a network element including a radio resource controller. Node B is a logical node responsible for radio transmission/reception in one or more cells to/from a User Equipment. A base station, BS, is a physical entity representing Node B.

Medium access control, MAC, and radio link control, RLC, are used within radio communications systems like General Packet Radio Services, GPRS, and UMTS.

U.S. Patent US5222061 describes a data services retransmission procedure to control unnecessary multiple retransmissions of a data packet by tracking the sequence numbers of transmitted packets. The data packet is retransmitted if it appears in the list prior to the last data packet that is received correctly. Upon retransmission, the sequence numbers of the list are rearranged. A receiver transmits a status control message to a transmitter periodically. The patent recognizes that the receiver may have correctly received a packet, which was included in a status control message.

U.S. Patent US6118765 also recognizes that a receiver may have correctly received a packet, multiply requested for retransmission, after a first retransmission. The patent discards unnecessarily transmitted data packets prior to packet forwarding.

3^{rd} Generation Partnership Project (3GPP): *Technical Specification Group Radio Access Network, Physical Layer Proce*dures, *3G TS 25.301 v3.6.0, France, September 2000,* specifies in chapter 5 Radio Interface Protocol Architecture of a UMTS system. There are three protocol layers:
- physical layer, layer 1 or L1,
- data link layer, layer 2 or L2, and
- network layer, layer 3 or L3.

Layer 2, L2, and layer 3, L3 are divided into Control and User Planes. Layer 2 consists of two sub-layers, RLC and MAC, for the Control Plane and four sub-layers, BMC, PDCP, RLC and MAC, for the User Plane. The acronyms BMC, PDCP, RLC and MAC denote Broadcast/Multicast Control, Packet Data Convergence Protocol, Radio Link Control and Medium Access Control respectively.

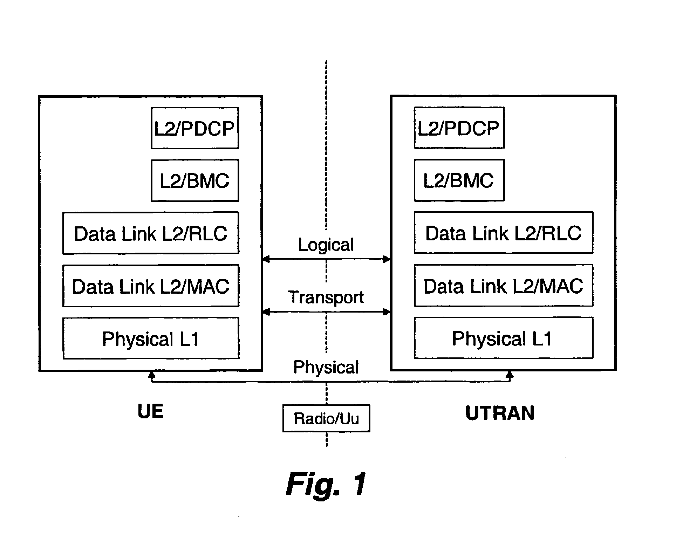

Figure 1 illustrates a simplified UMTS layers 1 and 2 protocol structure for a Uu Stratum, UuS, or Radio Stratum, between a user equipment UE and a Universal Terrestrial Radio Access Network, UTRAN.

Radio Access Bearers, RABs, make available radio resources (and services) to user applications. For each mobile station there may be one or several RABs. Data flows (in the form of segments) from the RABs are passed to respective Radio Link Control, RLC, entities which amongst other tasks buffer the received data segments. There is one RLC entity for each RAB. In the RLC layer, RABs are mapped onto respective logical channels. A Medium Access Control, MAC, entity receives data transmitted in the logical channels and further maps logical channels onto a set of transport channels. In accordance with subsection 5.3.1.2 of the 3GPP technical specification MAC should support service multiplexing e.g. for RLC services to be mapped on the same transport channel. In this case identification of multiplexing is contained in the MAC protocol control information.

Transport channels are finally mapped to a single physical channel which has a total bandwidth allocated to it by the network. In frequency division duplex mode, a physical channel is defined by code, frequency and, in the uplink, relative phase (I/Q). In time division duplex mode a physical channel is defined by code, frequency, and timeslot. The DSCH, e.g., is mapped onto one or several physical channels such that a specified part of the downlink resources is employed. As further described in subsection 5.2.2 of the 3GPP technical specification the L1 layer is responsible for error detection on transport channels and indication to higher layer, FEC encoding/decoding and interleaving/deinterleaving of transport channels.

PDCP provides mapping between Network PDUs (Protocol Data Units) of a network protocol, e.g. the Internet protocol, to an RLC entity. PDCP compresses and decompresses redundant Network PDU control information (header compression and decompression).

For transmissions on point-to-multipoint logical channels, BMC stores at UTRAN side Broadcast Messages received from an RNC, calculates the required transmission rate and requests for the appropriate channel resources. It receives scheduling information from the RNC, and generates schedule messages. For transmission the messages are mapped on a point-to-multipoint logical channel. At the UE side, BMC evaluates the schedule messages and deliver Broadcast Messages to upper layer in the UE.

3G TS 25.301 also describes protocol termination, i.e. in which node of the UTRAN the radio interface protocols are terminated, or equivalently, where within UTRAN the respective protocol services are accessible.

3^{rd} Generation Partnership Project (3GPP): *Technical Specification Group Radio Access Network, Physical Layer Procedures, 3G TS 25.322 v3.5.0, France, December 2000,* specifies the RLC protocol. The RLC layer provides three services to the higher layers:
- transparent data transfer service,
- unacknowledged data transfer service, and
- acknowledged data transfer service.

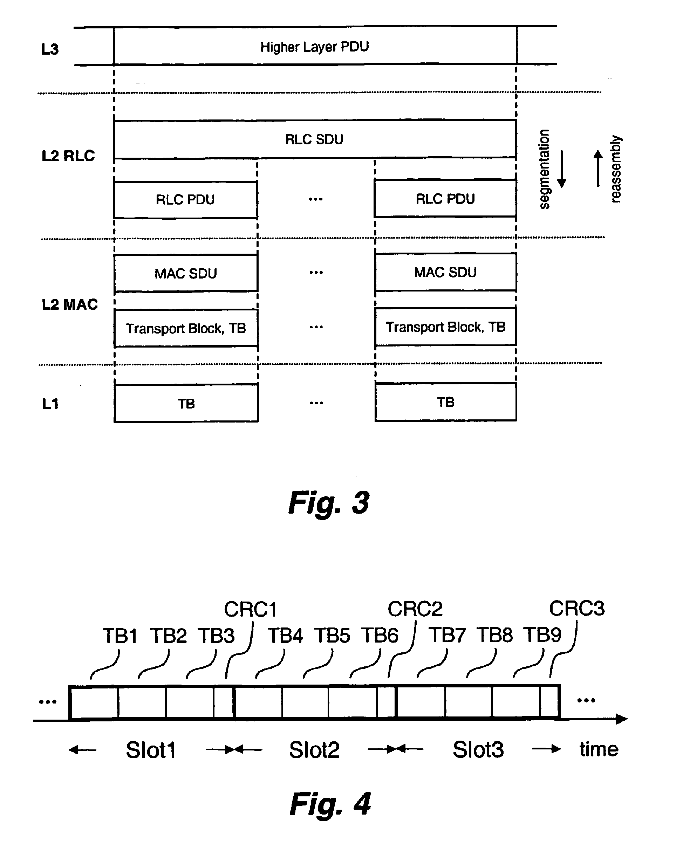

In subsection 4.2.1.3 an acknowledged mode entity, AM-entity, is described (see figure 4.4 of the 3GPP Technical Specification). In acknowledged mode automatic repeat request, ARQ, is used. The RLC sub-layer provides ARQ functionality closely coupled with the radio transmission technique used. The 3GPP technical specification also reveals various triggers for a status report to be transmitted. The receiver shall always send a status report, if it receives a polling request. There are also three status report triggers, which can be configured
1. Missing PU(s) Detected,
2. Timer Initiated Status Report, and
3. Estimated PDU Counter.

For trigger 1, the receiver shall trigger transmission of a status report to the sender if a payload unit, PU, is detected to be missing. (One PU is included in one RLC PDU.) With trigger 2, a receiver triggers transmission of a status report periodically according to a timer. Finally, trigger 3 relates in short to a timer corresponding to an estimated number of received PUs before the requested PUs are received.

None of the cited documents above discloses a method and system of eliminating unnecessary retransmissions for a layered protocol structure, for which two or more sub-layers can request retransmissions.

### SUMMARY OF THE INVENTION

Cited prior art references describe retransmissions between a UE and an RNC. According to preferred embodiments of the invention retransmissions are terminated in Node B and UE respectively.

Only specified transmission units are allowed for retransmissions in UMTS. According to the invention, a transmission unit preferably comprises one slot. Each transmission unit is composed of one or more transport blocks, TBs. Each TB comprises one or more protocol data units, PDUs.

If a transmission unit contains one or more errors, L2 MAC layer of the receiving side protocol preferably requests retransmission of that transmission unit, including all TBs it carries. Retransmitted TBs will arrive after a delay due to propagation and processing time.

The following scenario illustrates the concept of unnecessary retransmissions: L2 MAC layer delivers PDUs of correctly received TBs to L2 RLC layer. The L2 RLC layer identifies PDUs of TBs for which MAC-layer retransmission has been requested, but not yet arrived, as missing. The RLC generates status reports as prescribed in 3GPP Technical Specification 25.322. For this reason, PDUs may be requested for retransmission by both the MAC and the RLC sub-layers. If a transmission unit, retransmitted upon request at L2 MAC layer, contains no errors upon arrival, the RLC request for retransmission of the PDUs carried by the transmission unit is unnecessary. Unnecessary retransmissions cause excessive delay and waste of channel capacity.

Consequently, an object of this invention is to eliminate unnecessary RLC-retransmissions.

It is also an object to present a method of consecutive packet delivery of packets to the RLC layer.

A further object is to keep track of PDUs included in retransmitted TBs but not received at RLC sub-layer at the time for initiation of the RLC status report.

Finally, it is an object to only retransmit PDUs at RLC sub-layer if the latest TB-transmission including the PDUs have been received in time to be considered when establishing the RLC status report.

These objects are met by a method and an apparatus according to independent claims 1 and 20 respectively where by only one of the MAC and RLC sub-layers is responsible for retransmission of a particular PDU at a particular instance.

The invention is particularly well suited for a high-speed downlink packet access channel of an evolved universal mobile telecommunications system.

Preferred embodiments of the invention, by way of examples, are described with reference to the accompanying drawings below.

### BRIEF DESCRIPTION OF THE DRAWINGS

Figure 1 displays a layered protocol structure, according to prior art, in a radio communications system.
Figure 2 shows communication, according to the invention, between a UE and a base station involved in a connection between an RNC and the UE.
Figure 3 schematically illustrates MAC and RLC protocol layers, according to the invention, in a multilayer protocol structure.
Figure 4 schematically illustrates slots and transport blocks versus time on a physical channel, according to the invention.
Figure 5 graphically illustrates status report establishment for RLC PDUs delayed in a MAC layer, according to a first embodiment of the invention.
Figure 6 shows a flow chart of L1 and L2 MAC layer operations on a received transmission unit according to the first embodiment of the invention.
Figure 7 shows RLC PDUs as accepted in a MAC layer and as received in a higher RLC layer, according to a second embodiment of the invention.
Figure 8 depicts RLC PDUs as accepted in a MAC layer and as received in a higher RLC layer, according to a third embodiment of the invention.
Figure 9 shows a flow chart of L1 and L2 MAC layer operations on a received transmission unit according to the second embodiment of the invention.
Figure 10 shows a flow chart of L1 and L2 MAC layer operations on a received transmission unit according to the third embodiment of the invention.
Figure 11 illustrates an apparatus according to the first embodiment of the invention.
Figure 12 displays an apparatus according to the second and third embodiments of the invention.

### DESCRIPTION OF PREFERRED EMBODIMENTS

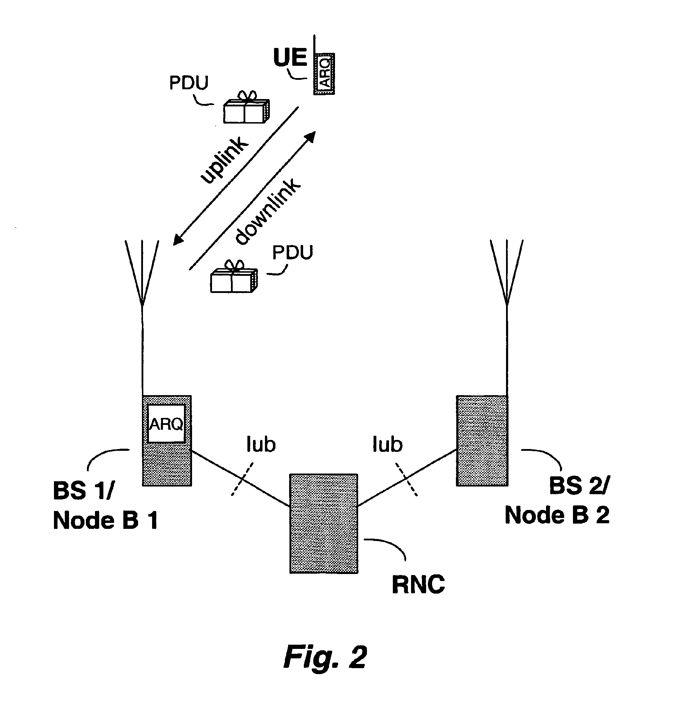

With reference to figure 2, Node B 1 and Node B 2 are logical nodes responsible for radio transmission/reception in one or more cells to/from the User Equipment UE. BS 1 and BS 2 are physical entities representing Node B 1 and Node B 2 respectively. Node B 1 and Node B 2 terminate the air interface, called Uu interface within UMTS, between UE and respective Node B towards the radio network controller RNC. In UMTS the interface between a Node B and an RNC is called Iub interface.

In an exemplary situation UE communicates over a radio link associated with BS 1. Packet switched data is transmitted in protocol data units, PDUs, in both directions. Each PDU is transported on a transport channel in a transport block, TB. As described above, transmission errors on the transport channel are corrected and detected by layer L1 of figures 1 and 3. Each transport block, TB, in figure 3 can be provided an individual CRC error-detecting checksum prior to transmission on the physical channel. However, preferably a transmission unit, carrying one or more TBs, is provided only one CRC error-detecting checksum. If a transmission unit is detected to be in error on the receiving side, this is reported to the L2 MAC layer.

L2 MAC layer can request retransmission of transmission units received in error. Transmission units detected to be in error still carry information that should not be wasted. Preferably hybrid ARQ, utilizing information available from earlier transmission(s) of a transmission unit by proper combining with the latest retransmission, is used prior to an L2 MAC layer request for retransmission.

Error detection, at the receiving end, is also performed by layer L2 RLC of figure 3. If an RLC protocol data unit, PDU, is received in error and the error is not recovered by forward error correction of the PDU or the PDU is missing, it will be requested for retransmission at a point in time when a status report is established by the RLC layer. RLC PDUs are transferred to/from the MAC layer SDUs. The MAC SDU possibly includes a header not included in the RLC PDU. As previously described, the RLC PDUs are transferred in transport blocks, TBs, on the physical channel. The L2 MAC layer transfers TBs to the L1 physical layer.

A network layer PDU or L3 PDU can comprise several RLC PDUs, as illustrated in figure 3. RLC PDUs are reassembled into RLC service data units, RLC SDU, prior to delivery to higher layer PDU. The L3 protocol can be, e.g., the Internet Protocol, IP. Upon reception from L3, RLC SDUs are segmented into RLC PDUs.

Figure 4 illustrates three out of a plurality of time slots on a physical channel, each slot representing a transmission unit. For illustrative purposes each of the time slots, Slot1 Slot2 and Slot3, is indicated to carry three transport blocks and a CRC checksum, TB1-TB3 & CRC1, TB4-TB6 & CRC2 and TB7-TB9 & CRC3 respectively. The present invention avoids unnecessary retransmissions of slots/retransmission units carrying transport blocks and the RLC PDUs included therein, in compliance with transmitted data and overhead.

In an evolved WCDMA system, a high-speed downlink packet access channel, HSDPA channel, is a channel with similarities to a DSCH. However, it is based on a novel transport channel type. An HSDPA channel supports many new features not supported by DSCH, but also inherits some of the characteristics of a DSCH. There are several important features of an HSDPA channel. A sample of features is:
- High data rates with peak data rates up to tens of Mbit/s.
- Data is transmitted to multiple users on a shared channel by means of time-division multiplex, TDM.
- Higher-order modulation.
- Fast retransmission with soft combining of retransmitted data at UE, also referred to as Fast Hybrid ARQ or Fast HARQ.
- Low air-interface delay, with maximum roundtrip delay down to some ten milliseconds.

It is preferred that the Fast Hybrid ARQ is terminated in Node B.

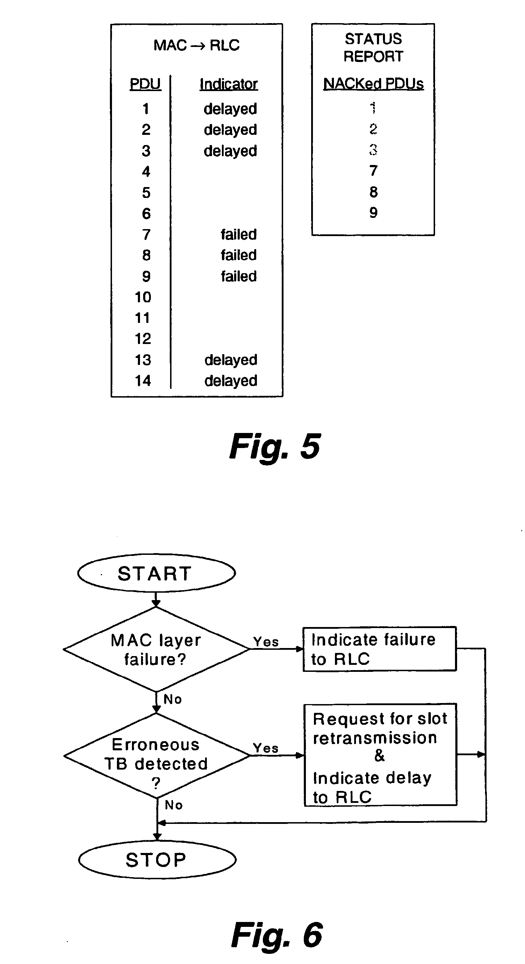

According to a first preferred embodiment, as explained in relation to figure 5, to all RLC PDUs, received by the MAC layer, an indicator is attached. It indicates to the L2 RLC layer if the RLC PDU is included in a request for retransmission at the MAC layer. Retransmission is initiated at the MAC layer if, in a set of transport blocks included in a transmission unit, an error was detected at decoding. In figure 5, the indicator used is "delayed." Of course, any appropriate indicator could be used for this purpose. In figure 5, retransmission units carrying RLC PDUs 1, 2, 3, 13 and 14 are indicated as being requested for retransmission. Consequently these RLC PDUs are delayed. Transport blocks carrying RLC PDUs 4, 5, 6, 10, 11 and 12 have been received and indicated to be error-free according to the CRC checksum. RLC PDUs 7, 8 and 9 have not been correctly received and no request for retransmission has been transmitted to the transmitting side for these PDUs. They are indicated by "failed." There could be various reasons for PDUs 7, 8 and 9 not being requested for retransmission. One reason could be the slot number of the slot, forming the transmission unit, carrying the PDUs has been corrupted during transfer. A failure during retransmission request could be another reason. Failed retransmissions, as those for RLC PDUs 7, 8 and 9, should be taken care of by L2 RLC layer. However, delayed RLC PDUs are already being retransmitted and should not be requested also by the L2 RLC layer, for unnecessary retransmissions to be avoided, unless the MAC layer indicates a failure. Consequently, according to a first embodiment of the invention RLC PDUs indicated to be delayed that have not yet arrived will be requested for retransmission only if L2 MAC layer indicates a failure prior to arrival of the delayed RLC PDUs. With reference to figure 5, RLC PDUs 1, 2 and 3 will not be included in an RLC status report (i.e. they will not be requested for retransmission by L2 RLC layer) if the status report is established prior to the point in time when a MAC failure is indicated for RLC PDUs 7, 8 and 9. However, if a status report establishment were triggered posterior to the MAC failure, they would be included in the status report as the report will cover all PDUs not included in the previous status report and indicated to be delayed, or for which a failure has occurred. The missing RLC PDUs 7, 8 and 9 will be detected as missing upon correct reception of slots carrying RLC PDUs 10 and higher. Therefore, also RLC PDUs 7, 8 and 9 are included in the status report requesting retransmission of delayed or failed retransmission units according to the first embodiment of the invention.

Figure 6 shows a flow chart of L1 and L2 MAC layer operation on a received transmission unit according to the first embodiment of the invention. As soon as a L2 MAC layer failure is detected this is indicated to layer L2 RLC. If no failure is detected, L2 MAC layer proceeds by checking for errors in the transmission unit. If an error detection is reported from L1 layer, L2 MAC layer initiates a request for retransmission of the transmission unit detected to be in error and indicates to L2 RLC all TBs, or corresponding RLC PDUs, requested for retransmission as being delayed.

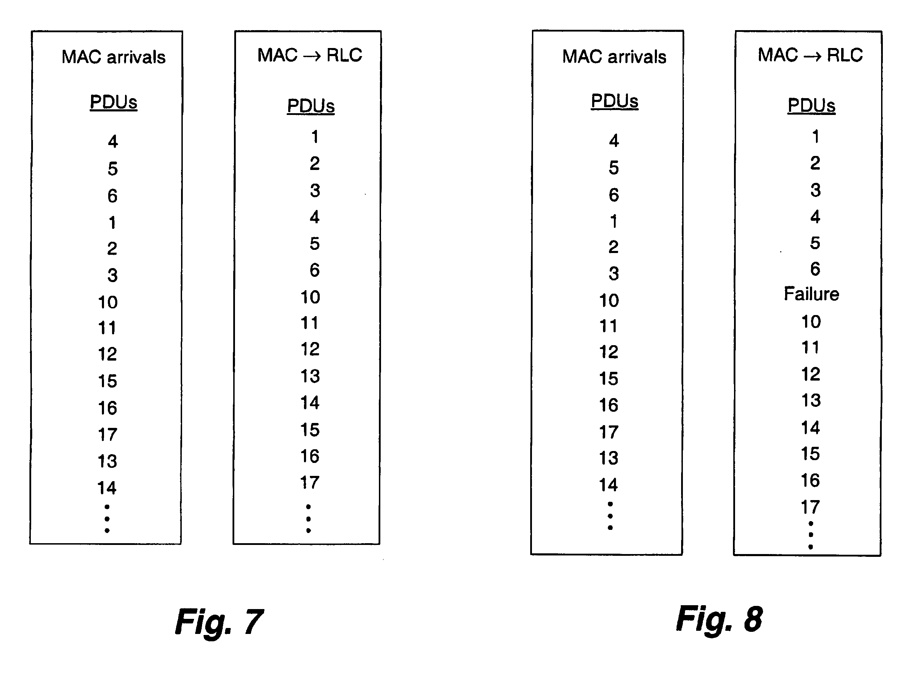

The principle of a second and third embodiment of the invention is illustrated in figures 7 and 8. By MAC layer received and accepted as error-free TBs, possibly after retransmission, corresponding to RLC PDUs are titled "MAC arrivals." Assuming RLC PDUs originally being sent consecutively, one or more transmission units carrying RLC PDUs 1, 2, and 3 apparently have been retransmitted and arrived after the one or more slots carrying RLC PDUs 4, 5 and 6. If, upon arrival of the TB carrying RLC PDU 4, this RLC PDU (or its corresponding MAC SDU) had been transferred to the RLC prior to the arrival of RLC PDUs 1, 2 and 3, a possibly triggered status report would have indicated RLC PDUs 1, 2 and 3 as missing, including these PDUs in a request for retransmission. However, the one or more retransmission units carrying these PDUs were already requested for retransmission by the L2 MAC layer and, if correctly received, an L2 RLC request for retransmission would have been unnecessary. In the second and third embodiments unnecessary retransmissions are avoided by buffering received TBs and delivering MAC SDUs to the L2 RLC layer sequentially according to the numbering of the RLC PDUs. This will introduce a delay as compared to the first embodiment of the invention. However, the second and third embodiments benefit from not requiring a delay indicator being transferred between the MAC and RLC sub-layers. As all MAC SDUs/RLC PDUs are delivered in numerical order to the L2 RLC layer, a failure will result in one or more missing RLC PDUs at RLC layer. An L2 RLC status report similar to that of figure 5 is triggered by status triggers according to prior art. RLC PDUs missing at the time of status report establishment will be negatively acknowledged and retransmitted.

According to the third embodiment of the invention, the L2 MAC layer indicates to the L2 RLC layer a failure as soon as detected. This is illustrated in figure 8 by the indicator "Failure" being transferred to RLC layer. When the L2 MAC layer detects a failure, it notifies the L2 RLC layer that preferably initiates establishment of a status report upon reception of this indication. Thereby, the retransmission delay for missing RLC PDUs can be reduced. According to the second embodiment of figure 7, there is no such indicator.

In figures 7 and 8 a MAC failure is detected after transmission unit carrying PDU 3 was successfully received. Upon a failure the MAC layer buffer content, if any, is transferred to the RLC layer for both the second and third embodiments.

As could be seen from the example for the second and third embodiments in figures 7 and 8, RLC PDUs 1, 2 and 3 are not included in a status report if triggered prior to the failure, as L2 RLC is not aware of any of RLC PDUs 1-6 until RLC PDU 3 has arrived, due to requirement on RLC PDUs (or corresponding MAC SDUs) being transferred from sub-layer L2 MAC to sub-layer L2 RLC in numerical order.

Thereafter, TBs carried by subsequently successfully received transmission units are buffered and corresponding PDUs transferred in numerical order to the RLC layer.

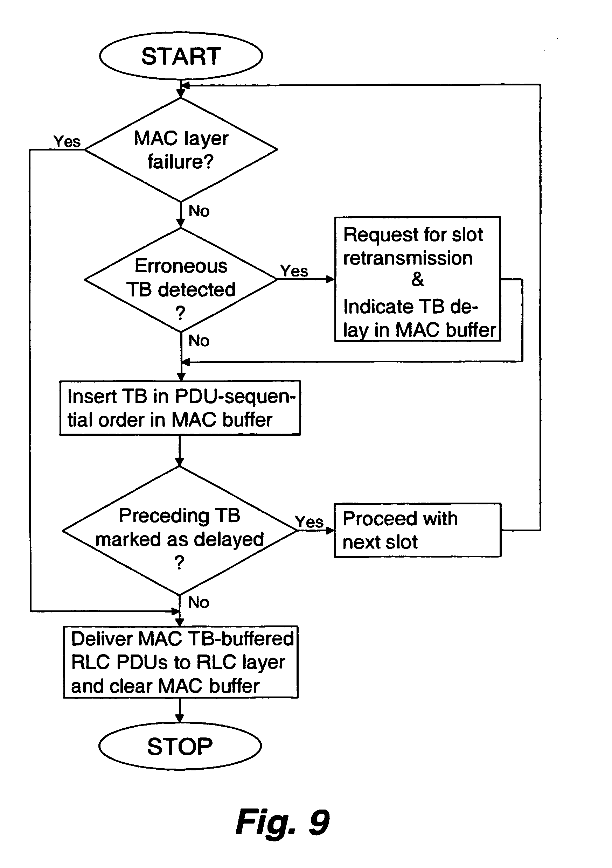

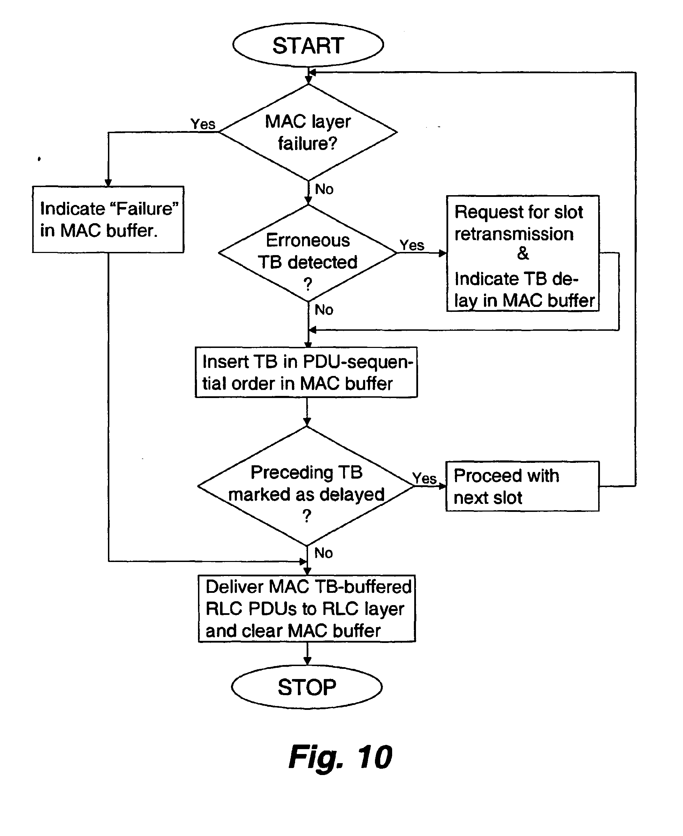

Figures 9 and 10 each show a flow chart of L1 and L2 MAC layer operations of the second and third embodiments respectively. In figures 9 and 10 a MAC failure is detected as it occurs according to a MAC failure detector. There could be various reasons for an L2 MAC failure. One reason could be the slot number of the slot, forming the transmission unit, carrying the PDUs has been corrupted during transfer. A failure during retransmission request could be another reason. For the second embodiment of figure 9, as soon as a MAC failure is detected the entire transmission unit is skipped and the MAC layer proceeds with analyses of the next transmission unit. In the third embodiment, as soon as a MAC failure is detected the MAC layer delivers all buffered PDUs (or corresponding MAC SDUs) to the L2 RLC layer (see figure 10) accompanied by a failure indicator. Missing PDUs will be requested for retransmission by the RLC layer, as described in relation to figures 7 and 8. With reference to figures 9 and 10, both the second and the third embodiments will transfer MAC TB-buffered RLC PDUs at particular instances to the L2 RLC layer. When the MAC buffer content has been transferred, it is cleared from the MAC buffer.

As an erroneous transmission unit (slot) is detected from the L1 CRC checksum, all transport blocks, TBs, carried by the transmission unit are preferably requested for retransmission. Of course, whenever an individual CRC checksum is applied to each TB, individual TBs of a transmission unit can be requested for retransmission as need be.

TBs requested for retransmission are indicated as delayed in the MAC buffer to keep track of TBs expected to arrive at a later instance. Correctly received TBs are inserted in the MAC buffer in accordance with the RLC PDU sequence number. RLC PDUs marked as delayed are replaced by their retransmissions when correctly received. As long as there are any preceding TB, or corresponding RLC PDU, marked as delayed upon insertion of a TB/PDU in the MAC buffer, the error-free TBs/PDUs are not in consecutive order and should not be transferred to the RLC layer, for unnecessary retransmissions to be avoided. Consequently, the MAC layer proceeds by processing next transmission unit. When a preset fraction of the MAC buffer is consecutively ordered with no preceding TBs/PDUs indicated as being delayed, this fraction is transferred to the RLC layer and cleared from the MAC buffer. Preferably the content of a transmission unit is transferred to the RLC layer as soon as it is verified that it is not preceded by a delay indicator in the MAC buffer, i.e. the preferred fraction corresponds to the amount of data carried by one transmission unit.

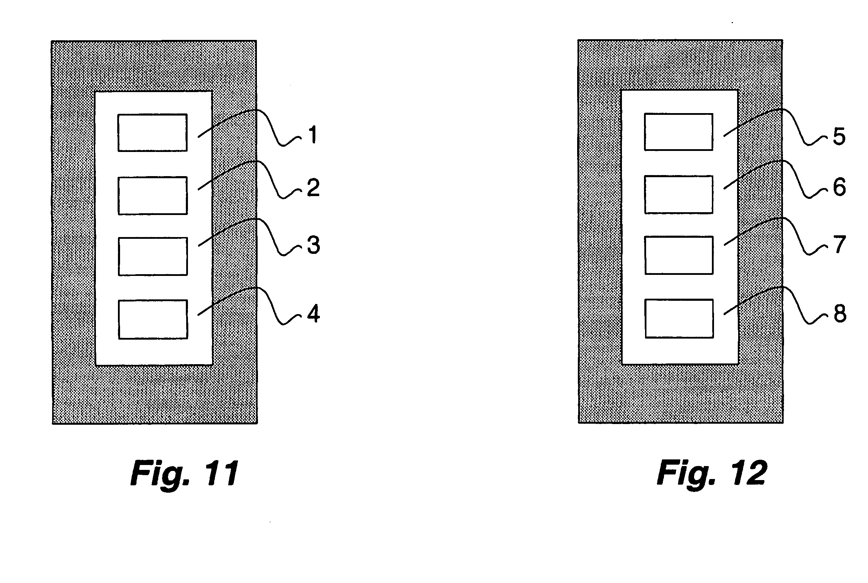

Figure 11 illustrates a user equipment according to the first embodiment including means 1 for setting an indicator indicating an L2 MAC layer failure and for transferring the indicator to the L2 RLC layer, means 2 for setting an indicator indicating an L2 MAC layer delay and for transferring the indicator to the L2 RLC layer, means 3 for detecting in the L2 RLC layer a failure indicator being transferred from the L2 MAC layer and means 4 for detecting at the L2 RLC layer a delay indicator being transferred from the L2 MAC layer.

Figure 12 shows a user equipment operating according to the second or third embodiment including means 5 for setting an indicator in an L2 MAC buffer, the indicator indicating data units requested for retransmission at the L2 MAC layer as being delayed, means 6 for setting an indicator in an L2 MAC layer buffer, the indicator indicating L2 MAC layer failure, means 7 for insertion of a transport block in PDU-sequential order in the L2 MAC layer buffer, and means 8 for transfer of L2 MAC layer buffer to L2 RLC layer and for clearing lower level protocol layer buffer. Only buffer content of L2 MAC layer buffer actually transferred to L2 RLC layer is cleared. Consequently, if the L2 MAC buffer is only transferred in partial, buffer content corresponding to the transferred part of the MAC layer buffer is cleared from the buffer.

Corresponding means as illustrated for a user equipment in figures 11 and 12 are also applicable in a network element communicating with the user equipment if the invention is applied in uplink direction. Consequently, the described means also apply for a network element housing the receiver side ARQ-machine. In figure 2, the UTRAN-side ARQ-machine resides in a base station BS 1, representing the network element. This preferred solution does not exclude an RNC from being the network element housing the receiver-side ARQ-machine.

A person skilled in the art readily understands that the receiver and transmitter properties of a BS or a UE are general in nature. The use of concepts such as BS, UE or RNC within this patent application is not intended to limit the invention only to devices associated with these acronyms. It concerns all devices operating correspondingly, or being obvious to adapt thereto by a person skilled in the art, in relation to the invention. As an explicit non-exclusive example the invention relates to mobile stations without a subscriber identity module, SIM, as well as user equipment including one or more SIMs. Further, protocols and layers are referred to in close relation with UMTS terminology. However, this does not exclude applicability of the invention in other systems with other protocols and layers of similar functionality.

The invention is not intended to be limited only to the embodiments described in detail above. Changes and modifications may be made without departing from the invention. It covers all modifications within the scope of the following claims.

## Claims

1. A method of coordinating retransmission requests from a lower protocol layer entity and an upper protocol layer entity implemented at a receiving entity of a wireless communication system, the method being **characterised by** the steps of: at the lower protocol layer entity, identifying missing or damaged upper layer Protocol Data Units and sending to a sending entity requests for retransmission of these Protocol Data Units, and preventing the upper protocol layer entity from sending requests for retransmission in respect of the same Protocol Data Units at least until the lower protocol layer entity has notified the upper protocol layer entity of a Protocol Data Unit sending failure.

2. The method according to claim 1, **characterised in that** the Protocol Data Units requested for retransmission are initially indicated to the upper protocol layer entity as being delayed.

3. The method according to claim 1 or 2, **characterised in that** if transport error information does not indicate a transmission error, Protocol Data Units received by the lower protocol layer entity are transferred to the upper protocol layer entity.

4. The method according to any of claims 1-3, **characterised in that** Protocol Data Units requested for retransmission by the lower protocol layer entity are requested for retransmission by the upper protocol layer entity conditionally on a subsequent failure indication from the lower protocol layer entity.

5. The method according to any one of claims 1 to 4, wherein said lower protocol layer entity is an L2 MAC protocol layer entity and said upper protocol layer entity is a L2 RLC layer entity in a universal mobile telecommunications protocol system.

6. The method according to claim 1, **characterised in that** Protocol Data Units are delivered in sequence from the lower protocol layer entity to the upper protocol layer entity and, in the event that a Protocol Data Unit is identified as damaged or missing by the lower protocol layer entity subsequently received Protocol Data Units are stored in a buffer of the lower protocol layer entity pending retransmission, and the lower protocol layer buffer content, if any, is transferred to the upper protocol layer entity upon detection of a failure or receipt of a retransmitted Protocol Data Unit.

7. The method according to claim 6, **characterised in that** Protocol Data Units requested for retransmission by the lower protocol layer entity are indicated as being delayed in a lower protocol layer buffer.

8. The method according to claim 7, **characterised in that** if any preceding Protocol Data Unit in the lower protocol layer buffer is indicated as being delayed, the lower protocol layer entity proceeds by processing the next received transmission unit.

9. The method according to claim 7, **characterised in that** if no preceding Protocol Data Unit in the lower protocol layer buffer is indicated as being delayed, the lower protocol layer buffer content is transferred to the upper protocol layer entity.

10. The method according to any one of claims 6 to 9, **characterised in that** if lower protocol layer transport error information does not indicate a transmission error, Protocol Data Units received by the lower protocol layer entity are inserted in sequential order in a lower protocol layer buffer.

11. The method according to claim 1, **characterised in that** if the lower protocol layer entity detects a failure, the lower protocol layer entity indicates the failure in a lower protocol layer buffer.

12. The method according to claim 11, **characterised in that** if no preceding Protocol Data Unit in the lower protocol layer buffer is indicated as being delayed, or if there is a failure indicator in the lower protocol layer buffer, the lower protocol layer buffer content is transferred to the upper protocol layer entity.

13. The method according to any of claims 1-12 **characterised in that** a request for retransmission of a Protocol Data Unit, by the upper protocol layer entity is achieved by identifying the Protocol Data Unit in a status report.

14. The method according to claim 13, **characterised in that** the sending of a status report is triggered by at least one of
- a failure indication from the lower protocol layer entity
- a missing Protocol Data Unit or payload unit detected,
- elapsed timer and,
- elapsed Protocol Data Unit counter.

15. The method according to any of claims 1-14, **characterised in that** in the lower protocol layer entity, retransmitted data is softly combined.

16. The method according to any of claim 1-15, **characterised in that** in the lower protocol layer entity, transmission units are requested for retransmission in accordance with HARQ.

17. The method according to any of claims 1-16, **characterised in that** the transmission unit is a slot.

18. The method according to any of claims 1-17, **characterised in that** the transmission unit comprises one or more transport blocks.

19. The method according to any of claims 1-18, **characterised in that** transmissions and retransmissions are transmissions on an HSDPA channel.

20. An apparatus comprising:
a first entity for implementing a lower layer protocol;
a second entity for implementing an upper layer protocol, **characterized in that**
said first entity is arranged to identify missing or damaged upper layer Protocol Data Units and to send to a sending entity requests for retransmission of these Protocol Data Units, and to prevent the upper protocol layer entity from sending requests for retransmission in respect of the same Protocol Data Units at least until the lower protocol layer entity has notified the upper protocol layer entity of a Protocol Data Unit sending failure.

21. The apparatus according to claim 20, **characterised in that** said first entity being arranged to transmit a failure indicator to said second entity.

22. The apparatus according to claim 20, said first entity being arranged to transmit a delay indicator to said second entity.

23. The apparatus according to claim 20, **characterised in that** said first entity being arranged to set an indicator in a lower protocol layer buffer, the indicator indicating Protocol Data Units requested for retransmission at the lower protocol layer as being delayed.

24. The apparatus according to claim 20, **characterised in that** said first entity being arranged to set an indicator in a lower protocol layer buffer, the indicator indicating a lower protocol layer failure.

25. The apparatus according to any of claims 20 to 24, **characterised in that** the apparatus is a user equipment of a communications system.

26. The apparatus according to claim 25, **characterised in that** the apparatus is a user equipment of a mobile communications system.

27. The apparatus according to any of claims 20 to 24, **characterised in that** the apparatus is a network element of a communications system.

28. The apparatus according to claim 27, **characterised in that** the apparatus is a network element of a mobile communications system.

29. The apparatus according to claim 28, wherein said apparatus is a base station or radio network controller of a universal mobile telecommunications system.

## Patentansprüche

1. Verfahren zum Koordinieren von Sendewiederholungsanforderungen von einer unteren Protokollschichtentität und einer oberen Protokollschichtentität, implementiert an einer Empfangsentität eines drahtlosen Kommunikationssystems, wobei das Verfahren durch folgende Schritte **gekennzeichnet** ist: an der unteren Protokollschichtentität fehlende oder beschädigte Protokolldateneinheiten der oberen Schicht identifizieren und Anforderungen zur Sendewiederholung dieser Protokolldateneinheiten an eine Sendeentität senden und verhindern, dass die obere Protokollschichtentität Anforderungen zur Sendewiederholung bezüglich derselben Protokolldateneinheiten sendet, wenigstens bis die untere Protokollschichtentität der oberen Protokollschichtentität einen Protokolldateneinheits-Sendefehler gemeldet hat.

2. Verfahren nach Anspruch 1, **dadurch gekennzeichnet, dass** die zur Sendewiederholung angeforderten Protokolldateneinheiten zuerst der oberen Protokollschichtentität als verzögert angezeigt werden.

3. Verfahren nach Anspruch 1 oder 2, **dadurch gekennzeichnet, dass**, falls Transportfehlerinformation keinen Sendefehler anzeigt, von der unteren Protokollschichtentität empfangene Protokolldateneinheiten an die obere Protokollschichtentität transferiert werden.

4. Verfahren nach einem der Ansprüche 1-3, **dadurch gekennzeichnet, dass** durch die untere Protokollschichtentität zur Sendewiederholung angeforderte Protokolldateneinheiten von der oberen Protokollschichtentität zur Sendewiederholung angefordert werden, unter Vorbehalt einer nachfolgenden Fehleranzeige von der unteren Protokollschichtentität.

5. Verfahren nach einem der Ansprüche 1-4, worin die untere Protokollschichtentität eine L2 MAC Protokollschichtentität ist und die obere Protokollschichtentität eine L2 RLC Schichtentität in einem universellen Mobiltelekommunikations-Protokollsystem ist.

6. Verfahren nach Anspruch 1, **dadurch gekennzeichnet, dass** Protokolldateneinheiten sequenziell von der unteren Protokollschichtentität an die obere Protokollschichtentität geliefert werden, und dass, falls eine Protokolldateneinheit durch die untere Protokollschichtentität als beschädigt oder fehlend identifiziert ist, nachfolgend empfangene Protokolldateneinheiten bis zur Sendewiederholung in einen Puffer der unteren Protokollschichtentität abgespeichert werden, und der Inhalt des unteren Protokollschichtpuffers, falls vorhanden, nach Detektion eines Fehlers oder Empfang einer wiedergesendeten Protokolldateneinheit an die obere Protokollschichtentität transferiert wird.

7. Verfahren nach Anspruch 6, **dadurch gekennzeichnet, dass** von der unteren Protokollschichtentität zur Sendewiederholung angeforderte Protokolldateneinheiten in einem unteren Protokollschichtpuffer als verzögert angezeigt werden.

8. Verfahren nach Anspruch 7, **dadurch gekennzeichnet, dass**, falls eine vorhergehende Protokolldateneinheit im unteren Protokollschichtpuffer als verzögert angezeigt wird, die untere Protokollschichtentität fortschreitet, indem sie die nächste empfangene Sendeeinheit verarbeitet.

9. Verfahren nach Anspruch 7, **dadurch gekennzeichnet, dass**, falls keine vorhergehende Protokolldateneinheit im unteren Protokollschichtpuffer als verzögert angezeigt wird, der Inhalt des unteren Protokollschichtpuffers an die obere Protokollschichtentität transferiert wird.

10. Verfahren nach einem der Ansprüche 6-9, **dadurch gekennzeichnet, dass**, falls Transportfehlerinformation der unteren Protokollschicht keinen Sendefehler anzeigt, von der unteren Protokollschichtentität empfangene Protokolldateneinheiten sequenziell in einen unteren Protokollschichtpuffer geschoben werden.

11. Verfahren nach Anspruch 1, **dadurch gekennzeichnet, dass**, falls die untere Protokollschichtentität einen Fehler detektiert, die untere Protokollschichtentität den Fehler in einem unteren Protokollschichtpuffer anzeigt.

12. Verfahren nach Anspruch 11, **dadurch gekennzeichnet, dass**, falls keine vorhergehende Protokolldateneinheit im unteren Protokollschichtpuffer als verzögert angezeigt ist oder falls es im unteren Protokollschichtpuffer einen Fehleranzeiger gibt, der Inhalt des unteren Protokollschichtpuffers an die obere Protokollschichtentität transferiert wird.

13. Verfahren nach einem der Ansprüche 1-12, **dadurch gekennzeichnet, dass** eine Anforderung zur Sendewiederholung einer Protokolldateneinheit von der oberen Protokollschichtentität durch Identifizieren der Protokolldateneinheit in einem Statusbericht erzielt wird.

14. Verfahren nach Anspruch 13, **dadurch gekennzeichnet, dass** das Senden eines Statusberichts durch mindestens eines der Folgenden ausgelöst wird:
- eine Fehleranzeige von der unteren Protokollschichtentität,
- Detektieren einer fehlenden Protokolldateneinheit oder Nutzinformationseinheit,
- einen abgelaufenen Timer und
- einen abgelaufenen Protokolldateneinheits-Zähler.

15. Verfahren nach einem der Ansprüche 1-14, **dadurch gekennzeichnet, dass** in der unteren Protokolldatenentität wiederholt gesendete Daten weich kombiniert werden.

16. Verfahren nach einem der Ansprüche 1-15, **dadurch gekennzeichnet, dass** in der unteren Protokollschichtentität Sendeeinheiten zur Sendewiederholung gemäß HARQ (hybrider automatischer Wiederholungsanforderung) angefordert werden.

17. Verfahren nach einem der Ansprüche 1-16, **dadurch gekennzeichnet, dass** die Sendeeinheit ein Slot ist.

18. Verfahren nach einem der Ansprüche 1-17, **dadurch gekennzeichnet, dass** die Sendeeinheit einen oder mehrere Transportblöcke umfasst.

19. Verfahren nach einem der Ansprüche 1-18, **dadurch gekennzeichnet, dass** Sendungen und Sendewiederholungen Sendungen auf einem HSDPA(Hochgeschwindigkeits-Downlink-Paketzugriff)-Kanal sind.

20. Vorrichtung, umfassend:
eine erste Entität zum Implementieren eines Unterschichtprotokolls;
eine zweite Entität zum Implementieren eines Oberschichtprotokolls, **dadurch gekennzeichnet, dass** die erste Entität dazu angeordnet ist, fehlende oder beschädigte Protokolldateneinheiten der oberen Schicht zu identifizieren und einer Sendeentität Sendewiederholungsanforderungen dieser Protokolldateneinheiten zu senden und zu verhindern, dass die obere Protokollschichtentität Anforderungen zur Sendewiederholung bezüglich derselben Protokolldateneinheiten sendet, wenigstens bis die untere Protokollschichtentität der oberen Protokollschichtentität einen Protokolldateneinheits-Sendefehler gemeldet hat.

21. Vorrichtung nach Anspruch 20, **dadurch gekennzeichnet, dass** die erste Entität dazu angeordnet ist, einen Fehleranzeiger an die zweite Entität zu senden.

22. Vorrichtung nach Anspruch 20, **dadurch gekennzeichnet, dass** die erste Entität dazu angeordnet ist, einen Verzögerungsanzeiger an die zweite Entität zu senden.

23. Vorrichtung nach Anspruch 20, **dadurch gekennzeichnet, dass** die erste Entität dazu angeordnet ist, einen Anzeiger in einen unteren Protokollschichtpuffer zu setzen, wobei der Anzeiger die zur Sendewiederholung an der unteren Protokollschicht angeforderten Protokolldateneinheiten als verzögert anzeigt.

24. Vorrichtung nach Anspruch 20, **dadurch gekennzeichnet, dass** die erste Entität dazu angeordnet ist, einen Anzeiger in einen unteren Protokollschichtpuffer zu setzen, wobei der Anzeiger einen unteren Protokollschichtfehler anzeigt.

25. Vorrichtung nach einem der Ansprüche 20-24, **dadurch gekennzeichnet, dass** die Vorrichtung ein Benutzergerät eines Kommunikationssystems ist.

26. Vorrichtung nach Anspruch 25, **dadurch gekennzeichnet, dass** die Vorrichtung ein Benutzergerät eines mobilen Kommunikationssystems ist.

27. Vorrichtung nach einem der Ansprüche 20-24, **dadurch gekennzeichnet, dass** die Vorrichtung ein Netzelement eines Kommunikationssystems ist.

28. Vorrichtung nach Anspruch 27, **dadurch gekennzeichnet, dass** die Vorrichtung ein Netzelement eines mobilen Kommunikationssystems ist.

29. Vorrichtung nach Anspruch 28, worin die Vorrichtung eine Basisstation oder ein Funknetzcontroller eines universalen Mobiltelekommunikationssystems ist.

## Revendications

1. Procédé de coordination des demandes de retransmission à partir d'une entité de couche de protocole inférieure et d'une entité de couche de protocole supérieure implémentées sur une entité de réception d'un système de communication sans fil, le procédé étant **caractérisé par** les étapes de: sur l'entité de couche de protocole inférieure, identification des unités de données de protocole de couche supérieure manquantes ou endommagées et envoi à une entité d'émission des demandes pour la retransmission de ces unités de données de protocole, et empêchement de l'entité de couche de protocole supérieure d'envoyer des demandes pour une retransmission par rapport aux mêmes unités de données de protocole au moins jusqu'à ce que l'entité de couche de protocole inférieure ait notifié à l'entité de couche de protocole supérieure une défaillance d'envoi d'unité de données de protocole.

2. Procédé selon la revendication 1, **caractérisé en ce que** les unités de données de protocole demandées pour une retransmission sont initialement indiquées à l'entité de couche de protocole supérieure comme étant retardées.

3. Procédé selon la revendication 1 ou 2, **caractérisé en ce que** si les informations d'erreur de transport n'indiquent pas une erreur de transmission, les unités de données de protocole reçues par l'entité de couche de protocole inférieure sons transférées à l'entité de couche de protocole supérieure.

4. Procédé selon l'une quelconque des revendications 1 à 3, **caractérisé en ce que** les unités de données de protocole demandées pour une retransmission par l'entité de couche de protocole inférieure sont demandées pour une retransmission par l'entité de couche de protocole supérieure conditionnellement sur une indication de défaillance ultérieure à partir de l'entité de couche de protocole inférieure.

5. Procédé selon l'une quelconque des revendications 1 à 4, dans lequel l'entité de couche de protocole inférieure est une entité de couche de protocole MAC L2 et ladite entité de couche de protocole supérieure est une entité de couche RLC L2 dans un système de protocole de télécommunication mobile universel.

6. Procédé selon la revendication 1, **caractérisé en ce que** les unités de données de protocole sont délivrées en séquence à partir de l'entité de couche de protocole inférieure à l'entité de couche de protocole supérieure et, dans le cas où une unité de données de protocole est identifiée comme endommagée ou manquante par l'entité de couche de protocole inférieure, des unités de données de protocole reçues par la suite sont stockées dans un tampon de l'entité de couche de protocole inférieure dans l'attente de la retransmission, et le contenu de tampon de couche de protocole inférieure, s'il y en a, est transféré à l'entité de couche de protocole supérieure lors de la détection d'une défaillance ou lors de la réception d'une unité de données de protocole retransmise.

7. Procédé selon la revendication 6, **caractérisé en ce que** les unités de données de protocole demandées pour la retransmission par l'entité de couche de protocole inférieure sont indiquées comme étant retardées dans un tampon de couche de protocole inférieure.

8. Procédé selon la revendication 7, **caractérisé en ce que** si aucune entité de données de protocole précédente dans le tampon de couche de protocole inférieure n'est indiquée comme étant retardée, l'entité de couche de protocole inférieure avance par le traitement de l'unité de transmission reçue suivante.

9. Procédé selon la revendication 7, **caractérisé en ce que** si aucune unité de données de protocole précédente dans le tampon de couche de protocole inférieure n'est indiquée comme étant retardée, le contenu du tampon de couche de protocole inférieure est transféré à l'entité de couche de protocole supérieure.

10. Procédé selon l'une quelconque des revendications 6 à 9, **caractérisé en ce que** si des informations d'erreur de transport de couche de protocole inférieure n'indiquent pas une erreur de transmission, des unités de données de protocole reçues par l'entité de couche de protocole inférieure sont insérées dans un ordre séquentiel dans un tampon de couche de protocole inférieure.

11. Procédé selon la revendication 1, **caractérisé en ce que** l'entité de couche de protocole inférieure détecte une défaillance, l'entité de couche de protocole inférieure indique la défaillance dans un tampon de couche de protocole inférieure.

12. Procédé selon la revendication 11, **caractérisé en ce que** si aucune unité de données de protocole précédente dans le tampon de couche de protocole inférieure n'est indiquée comme étant retardée, ou s'il y a un indicateur de défaillance dans le tampon de couche de protocole inférieure, le contenu de tampon de couche de protocole inférieure est transféré à l'entité de couche de protocole supérieure.

13. Procédé selon l'une quelconque des revendications 1 à 12, **caractérisé en ce qu'**une demande pour la retransmission d'une unité des données de protocole par l'entité de couche de protocole supérieure est obtenue en identifiant l'unité de données de protocole dans un rapport d'état.

14. Procédé selon la revendication 13, **caractérisé en ce que** l'envoi d'un rapport d'état est déclenché par au moins l'un de:
- une indication de défaillance à partir de l'entité de couche de protocole inférieure,
- une unité de données de protocole manquante ou une unité de charge utile détectée,
- un temps écoulé, et
- un compteur d'unités de données de protocole écoulées.

15. Procédé selon l'une quelconque des revendications 1 à 14, **caractérisé en ce que** dans l'unité de couche de protocole inférieure, les données retransmises sont combinées de façon logicielle.

16. Procédé selon l'une quelconque des revendications 1 à 15, **caractérisé en ce que** dans l'unité de couche de protocole inférieure, les unités de transmission sont demandées pour la retransmission selon une HARQ.

17. Procédé selon l'une quelconque des revendications 1 à 16, **caractérisé en ce que** l'unité de transmission est une tranche.

18. Procédé selon l'une quelconque des revendications 1 à 17, **caractérisé en ce que** l'unité de transmission comprend un ou plusieurs blocs de transport.

19. Procédé selon l'une quelconque des revendications 1 à 18, **caractérisé en ce que** les transmissions et les retransmissions sont des transmissions sur un canal HSDPA.

20. Appareil comprenant:
une première entité pour implémenter un protocole de couche inférieure ;
une seconde entité pour implémenter un protocole de couche supérieure, **caractérisé en ce que** ladite première entité est disposée pour identifier des unités de données de couche de protocole supérieure manquantes ou endommagées et envoyer à une entité d'envoi des demandes pour la retransmission de ces unités de données de protocole, et empêcher l'entité de couche de protocole supérieure d'envoyer des demandes pour une retransmission par rapport aux mêmes unités de données de protocole au moins jusqu'à ce que l'entité de couche de protocole inférieure ait notifié à l'entité de couche de protocole supérieure une défaillance d'envoi d'unité de données de protocole.

21. Appareil selon la revendication 20, **caractérisé en ce que** ladite première entité étant disposée pour retransmettre un indicateur de défaillance à ladite seconde entité.

22. Appareil selon la revendication 20, **caractérisé en ce que** la première entité étant disposée pour transmettre un indicateur de retard à ladite seconde entité.

23. Appareil selon la revendication 20, **caractérisé en ce que** ladite première entité étant disposée pour régler un indicateur dans un tampon de couche de protocole inférieure, l'indicateur indiquant des unités de données de protocole demandées pour la retransmission sur la couche de protocole inférieure comme étant retardées.

24. Appareil selon la revendication 20, **caractérisé en ce que** ladite première entité étant disposée pour régler un indicateur dans un tampon de couche de protocole inférieure, l'indicateur indiquant une défaillance de couche de protocole inférieure.

25. Appareil selon l'une quelconque des revendications 20 à 24, **caractérisé en ce que** l'appareil est un équipement d'utilisateur d'un système de communication.

26. Appareil selon la revendication 25, **caractérisé en ce que** l'appareil est un équipement d'utilisateur d'un système de communication mobile.

27. Appareil selon l'une quelconque des revendications 20 à 24, **caractérisé en ce que** l'appareil est un élément de réseau d'un système de communication.

28. Appareil selon la revendication 27, **caractérisé en ce que** l'appareil est un élément de réseau d'un système de communication mobile.

29. Appareil selon la revendication 28, dans lequel ledit appareil est une station de base ou un dispositif de commande de réseau radio d'un système de communication mobile universel.
